**Europäisches Patentamt**

**European Patent Office**

**Office européen des brevets**

(11) Veröffentlichungsnummer: **0 126 794**
**A1**

(12) **EUROPÄISCHE PATENTANMELDUNG**

(21) Anmeldenummer: **83105316.0**

(22) Anmeldetag: **30.05.83**

(51) Int. Cl.³: **H 01 H 15/10**
**B 23 Q 3/10**

(43) Veröffentlichungstag der Anmeldung:
**05.12.84 Patentblatt 84/49**

(84) Benannte Vertragsstaaten:
**AT BE CH DE FR GB IT LI LU NL SE**

(71) Anmelder: **Letzel, Helmut**
**Dünnwalder Mauspfad 382**
**D-5000 Köln 80(DE)**

(72) Erfinder: **Letzel, Helmut**
**Dünnwalder Mauspfad 382**
**D-5000 Köln 80(DE)**

(74) Vertreter: **Köhne, Friedrich, Dipl.-Ing.**
**Postfach 250265 Lothringer Strasse 81**
**D-5000 Köln 1(DE)**

(54) Vorrichtung zur elektromechanischen Steuerung und/oder Sicherung von Maschinenbewegungen.

㊇ Bei Vorrichtungen zur elektromechanischen Steuerung und/oder Sicherung von Maschinenbewegungen sind T-Nutenprofile sowie Nocken zur Betätigung von Grenztastern vorgesehen, wobei jeder Nocken mittels mindestens einer Schraube und eines Nutensteins an dem T-Nutenprofil befestigbar ist. In der Praxis gibt es eine Vielfalt von Nutenprofilen und Nocken, die noch dazu von den einzelnen Herstellern in den unterschiedlichsten Konstruktionen angeboten werden. Daraus ergibt sich eine große Vielzahl von Ausrüstungen, die in aller Regel nicht untereinander austauschbar sind. Da vor allem die Nocken Verschleißteile sind, entsteht besonders bei größeren Betrieben ein erheblicher Platzbedarf im Ersatzteillager, abgesehen von den hohen Kosten.

Um die bisherige Vielfalt an Ausrüstungen entscheidend zu verringern, wird vorgeschlagen, daß die Höhe der beiden sich bei jeder T-Nut gegenüberliegenden Balken so gewählt ist, daß sie im wesentlichen der Tiefe einer üblichen U-Nut entspricht. Ferner wird jeder Nocken aus einem im Querschnitt im wesentlichen rechteckigen Stab gebildet, welcher eine Führungsfeder, die entsprechend dem Abstand zwischen den beiden Balken bemessen ist, und eine keilförmige Leiste aufweist. Ferner wird der Nocken/wahlweise mit einem Nutenstein zur T-Nuten- oder U-Nutenbefestigung versehen.

FIG. 3

- 1 -

## Vorrichtung zur elektromechanischen Steuerung und/ oder Sicherung von Maschinenbewegungen.

Die Erfindung betrifft eine Vorrichtung zur elektromechanischen Steuerung und/oder Sicherung von Maschinenbewegungen mit einem oder mehreren T-Nutenprofilen sowie einem oder mehreren Nocken zur Betätigung von Grenztastern, wobei jeder Nocken mittels mindestens einer Schraube und eines Nutensteines an dem T-Nutenprofil befestigbar ist.

Vorrichtungen der vorbezeichneten Art sind in der Praxis in sehr vielfältigen Konstruktionen bekannt. Derartige Vorrichtungen für Maschinen aller Art sind anschaulich aufgebaut und von jedem Maschinenarbeiter mit normalen mechanischen und elektrischen Fachkenntnissen beherrschbar. Bei elektronischen Steuerungen sind ebenfalls elektromechanische Elemente für die Sicherung der Funktionsabläufe erforderlich. Für diese Elemente der elektromechanischen Steuerung wurden DIN-Normen aufgestellt, und zwar DIN 69 638 für Nutenprofile und Nutenteilungen und DIN 69 639 für Nocken zur Betätigung von Grenztastern. Die Nocken werden auf den Nutenprofilen befestigt und dienen zur Betätigung elektrischer Schalter, z.B. von Grenztastern, auf die sich die DIN 43 695 bzw. DIN 43 697 be-

- 2 -

ziehen.

Die bekannten Nutenprofile nach DIN 69 638 bestehen in drei Ausführungen, welche die Formenbezeichnungen A, B und C erhielten. Dementsprechend gibt es nach DIN 69 639 verschiedene Nockenkonstruktionen, welche im vorgenannten Normblatt die Formenbezeichnungen UA, UB, TA, TB und G erhielten. In der Fachsprache werden die Formen UA und UB als U-Nocken bezeichnet, weil die Nut nach Form A aus DIN 69 683 U-förmig gestaltet ist und daher als U-Nut bezeichnet wird. In entsprechender Weise ist die Form B als T-Nut bezeichnet und die Nocken TA und TB werden T-Nocken genannt. Bei der G-Form werden die Bezeichnungen Gitternut und Gitternocken verwendet. Für viele Zwecke werden auch runde bzw. kreisförmige Nutenprofile hergestellt, und zwar in Form von Nuttrommeln, welche nicht in einem Normblatt enthalten sind und welche nachfolgend als R-Form bezeichnet werden sollen. Zu den letzteren gibt es Radius-Nocken, welche der jeweiligen Rundung angepaßt sind und R-Nocken genannt werden. Der Vollständigkeit halber sei noch erwähnt, daß bei allen runden bzw. kreisförmigen oder ringförmigen Nutenprofilen die vorgenannte G-Form entfällt.

Aus dem vorerläuterten Stand der Technik wird ersichtlich, daß es in der Praxis eine Vielfalt von Nutprofilen und Nocken gibt, die noch dazu von den einzelnen Herstellern in den unterschiedlichsten Konstruktionen angeboten werden. Es ist zwar schon von einzelnen Maschinenherstellern versucht worden, mit möglichst wenigen Nutprofilen und zugehörigen

- 3 -

angepaßten Nocken auszukommen, jedoch kaufen die Anwender der Maschinen bei den verschiedensten Maschinenherstellern und erhalten so die gesamte Vielzahl der Ausrüstungen, die in aller Regel nicht untereinander austauschbar sind. Da vor allem die Nocken Verschleißteile sind, entsteht besonders bei größeren Betrieben ein erheblicher Platzbedarf im Ersatzteillager. Hinzu kommt eine entsprechende Mehrarbeit im Einkauf. Insgesamt ergeben sich sehr hohe Kosten.

Der Erfindung liegt die Aufgabe zugrunde, ausgehend von der zu Anfang erläuterten Vorrichtung, eine Ausgestaltung zu schaffen, wodurch die bisherige Vielfalt an Ausrüstungen entscheidend verringert werden kann.

Die gestellte Aufgabe wird erfindungsgemäß dadurch gelöst, daß die Höhe der beiden sich bei jeder T-Nut gegenüberliegenden Balken so gewählt ist, daß sie im wesentlichen der Tiefe einer üblichen U-Nut entspricht, daß jeder Nocken aus einem im Querschnitt im wesentlichen rechteckigen Stab gebildet ist, welcher eine Führungsfeder, die entsprechend dem Abstand zwischen den beiden Balken bemessen ist und eine keilförmige Leiste aufweist, und daß der Nocken wahlweise mit einem Nutenstein zur T-Nuten- oder U-Nutenbefestigung versehen ist.

Auf diese Weise ergibt sich der wesentliche Vorteil, daß man einmal mit einheitlichen T-Nutenprofilen und einheitlichen Nockenprofilen wahlweise eine T-Nuten- oder U-Nutenbefestigung vornehmen kann,

- 4 -

daß zum anderen die einheitlichen T-Nutenprofile
für alle bisher bekannten U-Nocken und T-Nocken
verwendbar sind und schließlich daß die erfindungsgemäßen einheitlichen Nocken bei bisher bekannten
T-Nutenprofilen und U-Nutenprofilen, Rundnutenprofilen und schließlich bei Gitternuten anwendbar
sind.

Vorteilhafte Ausgestaltungen der Erfindung ergeben
sich aus den Unteransprüchen.

In der Zeichnung sind Ausführungsbeispiele und Anwendungsbeispiele der Erfindung im Schema dargestellt und zwar zeigen:

Fig. 1  einen Querschnitt durch ein T-Nutenprofil mit zwei parallel zueinander verlaufenden
Nuten,

Fig. 2  einen Querschnitt durch ein T-Nutenprofil mit einer Nut und einem eingesetzten Nocken
mit U-Nutenbefestigung,

Fig. 3  einen Querschnitt gemäß Fig. 2 mit
T-Nutenbefestigung eines Nockens,

Fig. 4  einen Querschnitt durch ein T-Nutenprofil gemäß dem Stand der Technik, wobei ein Einheitsnocken gemäß der Erfindung eingesetzt ist,

Fig. 5  einen Querschnitt durch ein T-Nutenprofil gemäß Fig. 1 mit einer Schnellbefestigungsvorrichtung,

Fig. 6  eine Teildraufsicht zu Fig. 5 in Richtung des Pfeiles VI in Fig. 5,

Fig. 7  einen Querschnitt durch zwei miteinander verbundene  T-Nutenprofile  mit vier bzw.
drei parallel zueinander verlaufenden Nuten,

- 5 -

Fig. 8 einen Axialschnitt durch einen Trommelkörper mit fünf nebeneinander aufgezogenen Nutringen,

Fig. 9 einen Schnitt mit einem Wellenzapfen,
drei nebeneinander aufgezogenen Nutringen, wobei ein Nocken eingesetzt ist,

Fig. 10 eine Teildraufsicht auf ein T-Nutenprofil
mit einem Nutenstein in Einführstellung,

Fig. 11 eine Draufsicht gemäß Fig. 10, wobei
sich der Nutenstein geschwenkt in Betriebsstellung befindet,

Fig. 12 einen Querschnitt durch einen Einheitsnocken,

Fig. 13 eine Seitenansicht zu dem Nocken gemäß
Fig. 12,

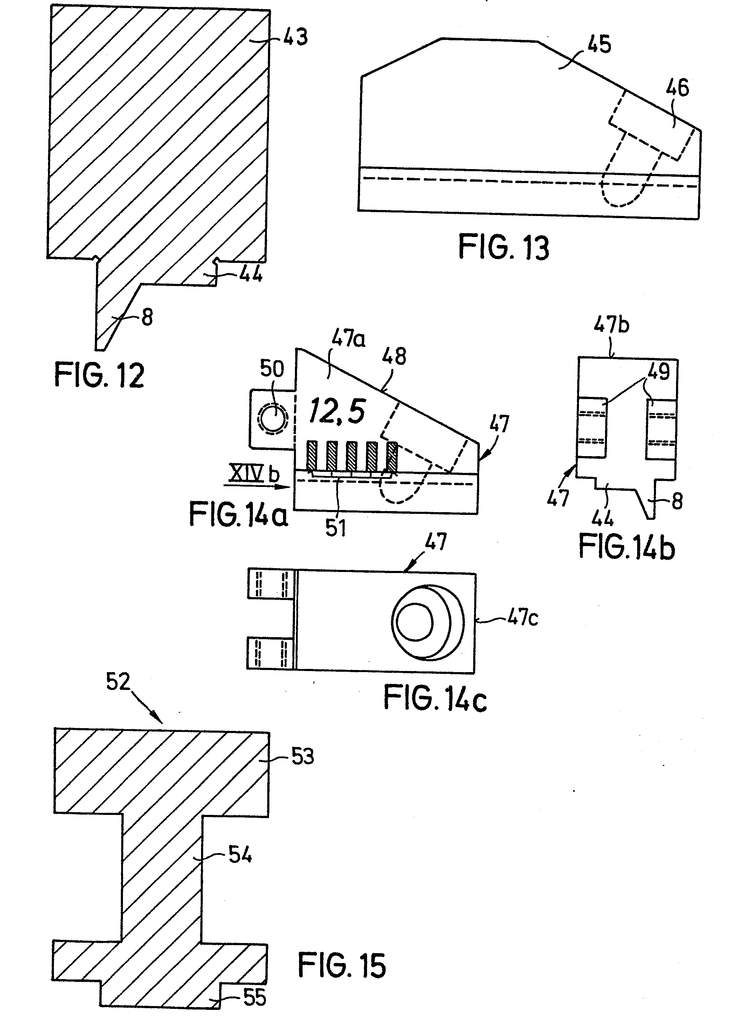

Fig. 14 drei Ansichten eines Nockenendstückes,
wobei Fig. 14 a eine Seitenansicht, Fig. 14 b
eine Stirnansicht gemäß Pfeil XIV b und Fig.
14 c eine Draufsicht zu Fig. 14 a bilden,

Fig. 15 einen Querschnitt durch ein Doppel-T-
Profil, welches zur Verbindung mit einem Nokkenendstück gemäß Fig. 14 bestimmt ist,

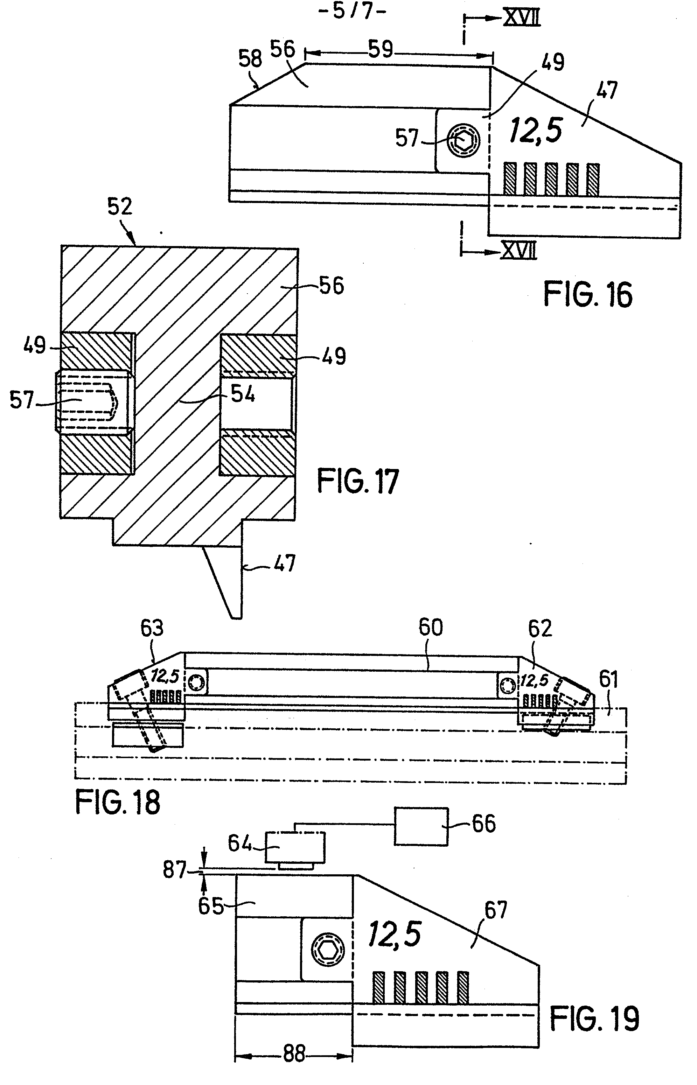

Fig. 16 eine Seitenansicht auf einen Nocken,
welcher aus einem Nockenendstück gemäß Fig. 14
und einem Doppel-T-Profil gemäß Fig. 15 zusammengesetzt ist,

Fig. 17 einen Querschnitt hierzu gemäß Schnittlinie XVII - XVII in Fig. 16,

Fig. 18 eine Seitenansicht auf einen Nocken,
welcher aus zwei Nockenendstücken gemäß Fig.
14 und einem der zwischenbefestigten Doppel-
T-Profil gemäß Fig. 15 besteht,

Fig. 19 eine Seitenansicht auf einen Nocken

- 6 -

mit einem berührungslosen Schalter,

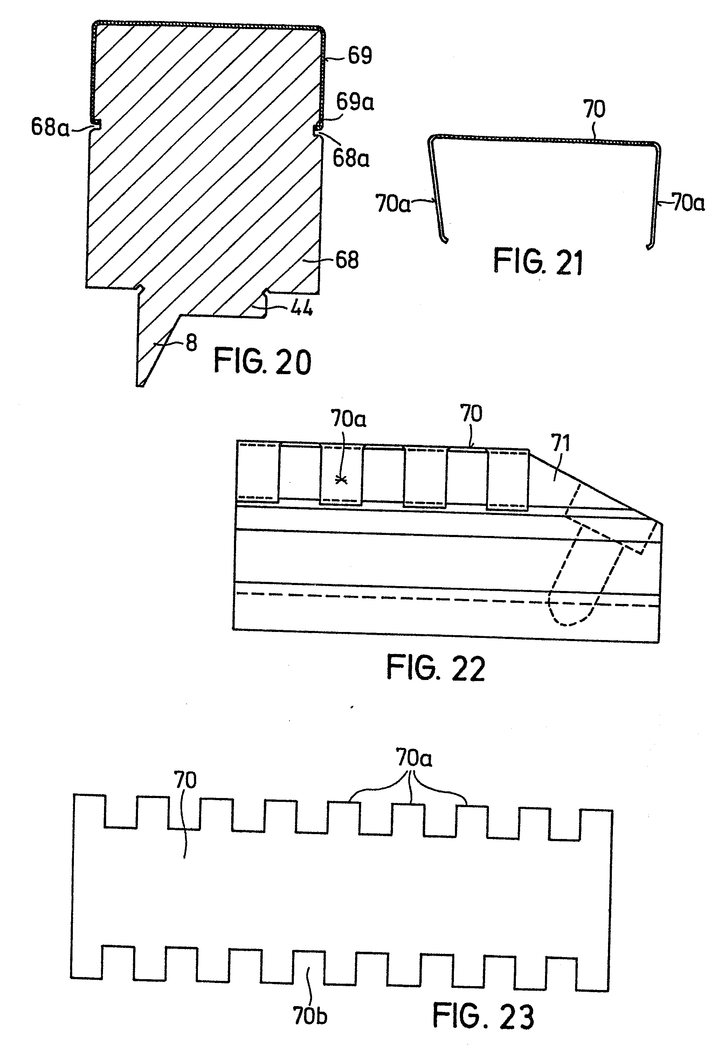

Fig. 20 einen Querschnitt gemäß Fig. 12, jedoch mit aufgesetztem Metallblechprofil,

Fig. 21 eine Stirnansicht des Metallblechprofiles gemäß Fig. 20, jedoch in entspanntem Zustand,

Fig. 22 eine Seitenansicht auf einen Nocken mit einem anders ausgestalteten Metallblechprofil,

Fig. 23 eine Abwicklung des Metallblechprofiles gemäß Fig. 22, jedoch in verlängerter Form,

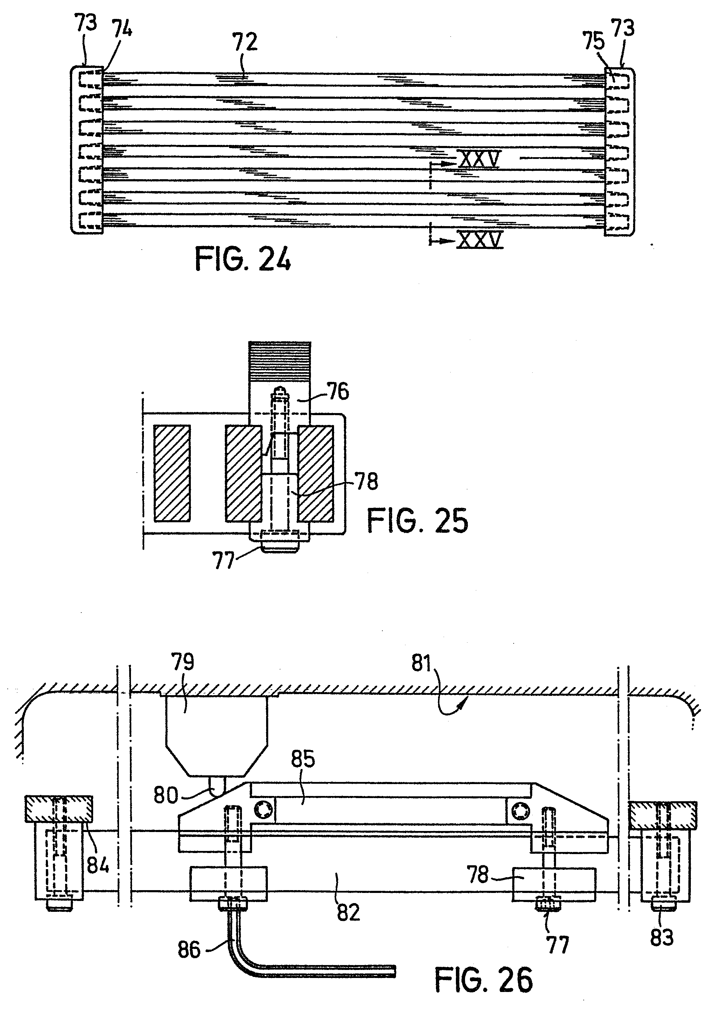

Fig. 24 eine Draufsicht auf ein an sich bekanntes Gitter-Nutenfeld,

Fig. 25 einen Teilquerschnitt gemäß Schnittlinie XXV - XXV in Fig. 24 mit einem eingesetzten Einheitsnocken und

Fig. 26 eine Seitenansicht auf ein Gitter-Nutenfeld mit einem eingesetzten Nocken gemäß Fig. 18 und mit einem Grenztaster.

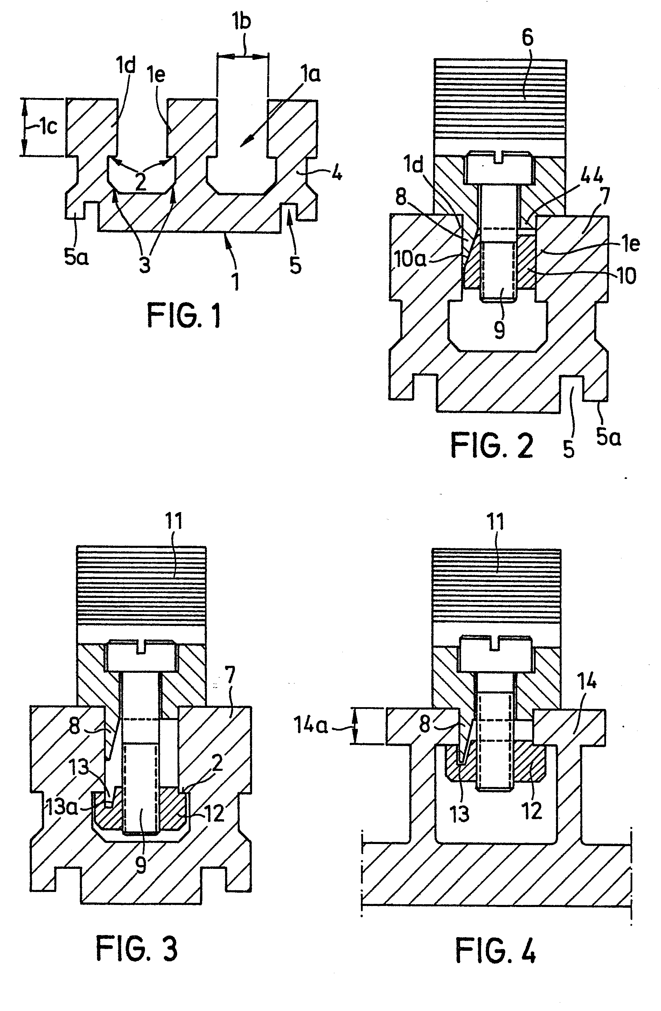

Fig. 1 veranschaulicht ein Ausführungsbeispiel eines erfindungsgemäßen T-Nutenprofiles 1 mit zwei parallel zueinander und senkrecht zur Bildebene verlaufenden T-Nuten 1 a. Mit dem Bezugszeichen 1 b ist die offene Weite der T-Nut bzw. der Abstand zwischen den beiden sich bei jeder T-Nut 1 a gegenüberliegenden Balken 1 d, 1 e bezeichnet. Die Höhe 1 c der Balken 1 d, 1 e ist so gewählt, daß sie im wesentlichen der Tiefe einer üblichen U-Nut entspricht, vorzugsweise also der Tiefe der U-Nut nach Form A der DIN 69 638. Die Innenwände der Balken 1 d, 1 e sind über der Höhe 1 c paral-

- 7 -

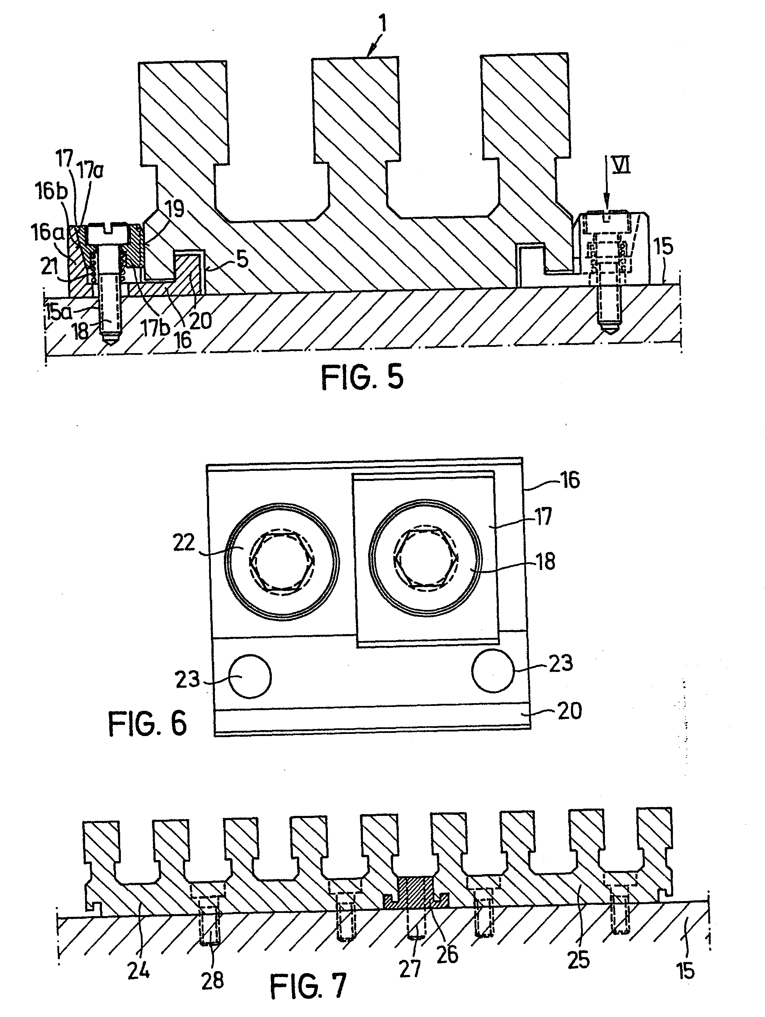

lel zueinander bzw. senkrecht nach unten geführt. Hieran schließen sich vorzugsweise unter einem rechten Winkel Schultern 2 an. Der untere bzw. innere Teil der T-Nut 1 a ist so erweitert, daß Nutensteine zur T-Nutenbefestigung hierin Platz finden und sich im Betriebszustand gegen die Schultern 2 legen können. Bei dieser Gestaltungsweise des T-Nutenprofiles ist es möglich, wie nachfolgend noch näher erläutert wird, sowohl die ebenfalls nachfolgend beschriebenen erfindungsgemäßen im Profil einheitlichen Nocken als auch alle bekannten T-Nocken und U-Nocken zu befestigen. Vorteilhafterweise sind zwischen der Bodenfläche jeder T-Nut 1 a und den längsverlaufenden Seitenwänden des erweiterten Teiles jeder T-Nut 1 a Schrägflächen 3 vorgesehen, welche die Stabilität des T-Nutenprofiles wesentlich erhöhen und dazu beitragen, daß sich die Stege 4 vor allem beim Befestigen mehrerer U-Nocken nicht ausbiegen. Auf der Unterseite des T-Nutenprofiles 1 sind mit Abstand von den äußeren Längsseiten rillenförmige Aussparungen 5 sowie sich hieran anschließende bis zu den Längsseiten führende abgeflachte Aussparungen 5 a vorgesehen. Diese Aussparungen 5, 5 a dienen zum Einsatz einer nachfolgend anhand der Fig. 5 beschriebenen Schnellbefestigungsvorrichtung. Wie die Fig. 1 verdeutlicht, sind die beiden senkrecht zur Bildebene verlaufenden Außenseiten des T-Nutenprofiles so ausgebildet, daß zusammen mit seitlich angesetzten weiteren T-Nutenprofilen T-Nuten entstehen, die der T-Nut 1 a entsprechen, wie z.B. aus der nachfolgend beschriebenen Fig. 7 zu ersehen ist.

- 8 -

Fig. 2 veranschaulicht ein Ausführungsbeispiel eines T-Nutenprofiles 7 mit einer senkrecht zur Bildebene verlaufenden T-Nut. Ansonsten gelten für dieses T-Nutenprofil die gleichen Erläuterungen wie zu Fig. 1. Fig. 2 verdeutlicht ferner, wie ein Nocken 6, und zwar bei diesem Ausführungsbeispiel als U-Nocken in der T-Nut des T-Nutenprofils 7 eingesetzt und befestigt ist. Der Nocken ist aus einem im Querschnitt im wesentlichen rechteckigen Stab gebildet, welcher eine Führungsfeder 44 und eine keilförmige Leiste 8 aufweist, und zwar vorteilhafterweise einstückig mit dem Nocken 6. Die Führungsfeder 44 ist entsprechend dem Abstand zwischen den beiden Balken 1 d, 1 e bemessen. Mit der keilförmigen Leiste 8 wirkt ein Nutenstein 10 für die U-Nutenbefestigung zusammen, welcher eine der Schrägfläche der Leiste 8 angepaßte Schräg- bzw. Keilfläche 10 a aufweist. Der Nutenstein 10 ist mittels einer Schraube 9 mit dem Nocken 6 befestigt. Durch Anziehen der Schraube 9 und durch die seitliche Komponente der Anzugskraft, die durch die keilförmige Gestaltung der Leiste 8 und des Nutensteines 10 entsteht, wird der Nocken 6 festgeklemmt.

Fig. 3 zeigt das gleiche T-Nutenprofil wie Fig.2, jedoch ist in diesem Falle eine T-Nutenbefestigung vorgesehen. Der T-Nocken 11, der dem U-Nocken 6 nach Fig. 2 entspricht, ist wieder mittels einer Schraube 9 mit einem Nutenstein 12 verbunden. Dieser Nutenstein 12 wird durch die Schraube gegen die Schultern 2 des T-Nutenprofils 7 gezogen. Der Nutenstein 12 für die T-Nutenbefestigung weist auf der nach dem Nocken 11 zu liegenden Seite ei-

- 9 -

ne längsverlaufende rillenförmige Aussparung 13 mit einer Schräg- bzw. Keilfläche 13 a auf. Die rillenförmige Aussparung 13 ist vorgesehen, um mindestens einen Teil der keilförmigen Leiste 8 des Nockens 11 aufzunehmen, wenn der Nocken in einem T-Nutenprofil nach DIN 69 638 befestigt werden soll, wie in Fig. 4 dargestellt ist.

Das in Fig. 4 dargestellte T-Nutenprofil 14 entspricht einem T-Nutenprofil nach DIN 69 638. Anders als bei dem erfindungsgemäßen T-Nutenprofil 1 oder 7 nach den Fig. 1 bis 3 ist das Maß 14 a wesentlich kleiner als die Höhe 1 c der Balken 1d, 1 e (Fig. 1). Die keilförmige Leiste 8 dringt zum Teil in die rillenförmige Aussparung 13 ein und dient so auch zur Führung des Nutensteins 12 in Längsrichtung. Der erfindungsgemäße Nocken 6 bzw. 11 und ebenso der Nutenstein 12 können somit auch für alle mit Nutenprofilen nach DIN 69 638 ausgerüsteten Maschinen verwendet werden.

Fig. 5 veranschaulicht eine Schnellbefestigungsvorrichtung für ein T-Nutenprofil. Als Ausführungsbeispiel zeigt Fig. 5 das T-Nutenprofil 1 entsprechend Fig. 1. Die Schnellbefestigungsvorrichtung weist mindestens zwei spiegelbildlich einander und quer zur Längsrichtung des Nutenprofiles 1 gegenüberliegende U-förmige nach oben öffnende Spannelemente 16 auf. Je ein Schenkel der Spannelemente greift mit Spiel in die betreffende rillenförmige Aussparung 5 ein. Dieser innere im wesentlichen im Querschnitt rechteckige Schenkel 20 ist kürzer als der andere längere Schenkel 16 a. Der

- 10 -

letztere besitzt eine schräg- bzw. keilförmig verlaufende Innenfläche 16 b. Zwischen dieser keilförmigen Innenfläche 16 b und der äußeren Längsseite 19 des T-Nutenprofils 1 ist ein Klemmstück 17 eingesetzt, welches mit einer Längsfläche an der Längsseite 19 und mit einer gegenüber befindlichen Keilfläche 17 a an der keilförmigen Innenfläche 16 b anliegt. Das Klemmstück 17 hat eine Bohrung 17 b und auch das Spannelement 16 ist mit einer Bohrung versehen. Durch diese Bohrungen ist eine Schraube 18 hindurchgeführt, die in einer Gewindebohrung 15 a eines Maschinenbettes 15 oder eines Maschinenschlittens einschraubbar ist. Das T-Nutenprofil 1 und die Spannelemente 16 liegen ebenflächig auf der Oberfläche des Maschinenbettes 15 oder Maschinenschlittens auf. Die Wirkungsweise der Schnellbefestigungsvorrichtung ist im wesentlichen folgende. Wenn die Schraube 18 angezogen wird, drückt sie das Klemmstück 17 nach unten, welches gleichzeitig seitlich gegen die Längsseite 19 des T-Nutenprofiles 1 gedrückt wird. Dieser Seitendruck wird in der Aussparung 5 durch den hierin eingreifenden Schenkel 20 des Spannelementes 16 aufgenommen. Das T-Nutenprofil 1 wird dadurch gleichzeitig gespannt und durch die Tiefspannwirkung des Klemmstückes 16 mit den beschriebenen Keilflächen nach unten auf die Aufnahmefläche des Maschinenbettes gedrückt. Vorteilhafterweise ist die Bohrung 17 b des Klemmstückes 17 im unteren Teil erweitert. In diesem erweiterten Teil ist eine die Schraube 18 teilweise umgebende Druckfeder 21 eingesetzt. Beim Lösen der Schraube 18 wird somit das Klemmstück 17 von der Druckfeder 21

- 11 -

nach oben bewegt und gibt das T-Nutenprofil 1 frei,
so daß es entnommen werden kann. Durch diese
Schnellbefestigungsvorrichtung ist es möglich, daß
Nutenfelder, die aus bestimmten T-Nutenprofilen
zusammengesetzt sind, kurzzeitig gegen andere ausgetauscht werden können, z.B. wenn eine Änderung
des Programmes für den Arbeitsablauf gewünscht
wird.

Fig. 6 zeigt eine Teildraufsicht zu Fig. 5 in
Richtung des Pfeiles VI, und zwar ist hieraus ersichtlich, daß das Spannelement 16 durch eine weitere Schraube 22, vorzugsweise eine Zylinderschraube, auf der Aufnahmefläche des Maschinenbettes 15
oder des Maschinenschlittens befestigt ist. Ferner
sind zwei Paßstifte 23 vorgesehen, die zur Ausrichtung des Spannelementes 16 und zur Aufnahme
des seitlichen Schubs dienen. Die Schraube 18, welche das Klemmstück 17 spannt und damit auch das
Spannelement 16 auf die vorgenannte Aufnahmefläche
zieht, ist ebenso wie die Schraube 22 als Innensechskantschraube dargestellt. Die Länge des
Schenkels 20 ermöglicht das Ausrichten des T-Nutenprofils in Längsrichtung mit der Anlagefläche der
Aussparung 5 (Fig. 5).

Fig. 7 veranschaulicht ein Ausführungsbeispiel einer Kombination eines Vierfach-T-Nutenprofils 24
mit einem Dreifach-T-Nutenprofil 25. Zwecks Verbindung dieser T-Nutenprofile 24, 25 miteinander
ist eine Profilleiste 26 vorgesehen, welche in die
oben erläuterten Aussparungen 5, 5 a der benachbarten T-Nutenprofile eingreifend ausgebildet ist

- 12 -

und deren Breite so gewählt ist, daß die durch die Profilleiste und die benachbarten T-Nutenprofile gebildete T-Nut den übrigen T-Nuten entspricht. Die Profilleiste 26 wird also zwischen jeweils zwei T-Nutenrpofilen angeordnet und durch Paßstifte 27 ausgerichtet. Hierdurch wird der Abstand hergestellt, welcher der Nutteilung der T-Nutenprofile entspricht. Im vorliegenden Ausführungsbeispiel wird aus dem Vierfach- und dem Dreifach-T-Nutenprofil somit ein Achtfach-T-Nutenprofil hergestellt. Die T-Nutenrpofile 24 und 25 sind gemäß Fig. 7 durch Zylinderkopfschrauben 28 auf der Aufnahmefläche des Maschinenbettes 15 bzw. Maschinenschlittens befestigt. Die Verwendung der anhand der Fig. 5 beschriebenen Schnellbefestigungsvorrichtung ist ebenfalls möglich. In diesem Falle ist es zweckmäßig, die Profilleiste 26 mit den T-Nutenprofilen 24 und 25 durch einen Metallkleber zu verbinden.

Die Kombinationsfähigkeit der T-Nutenprofile gibt die Möglichkeit, nur wenige T-Nutenprofile zu lagern und daraus die gebräuchlichsten Nutzahlen herzustellen. Lagert man z.B. vier T-Nutenprofile, wobei das eine eine Nut, das zweite zwei Nuten, das dritte drei Nuten und das vierte vier Nuten aufweist, so ergeben sich hieraus folgende Kombinationsmöglichkeiten:

Ein Nutenfeld mit fünf Nuten ergibt sich aus den beiden T-Nutenprofilen mit drei und einer Nut. Sechs Nuten ergeben sich aus den beiden T-Nutenprofilen mit vier und einer Nut. Sieben Nuten ergeben sich aus den beiden T-Nuten-

- 13 -

profilen mit vier und zwei Nuten.

Acht Nuten entstehen aus T-Nutenprofilen mit vier
und drei Nuten.

Neun Nuten werden aus den T-Nutenprofilen mit vier
und vier Nuten gebildet.

Nutenfelder mit noch höheren Nutzahlen sind ebenfalls möglich, wenn man entsprechend drei oder
mehr T-Nutenprofile miteinander kombiniert.

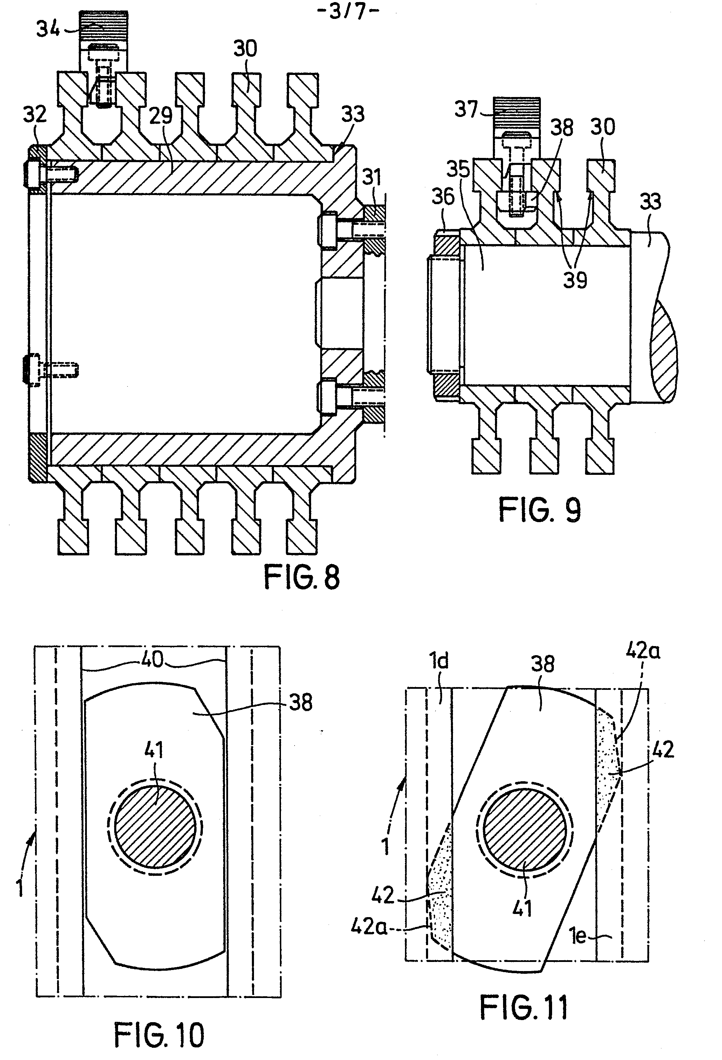

Fig. 8 zeigt ein anderes Ausführungsbeispiel mit
erfindungsgemäßen T-Nutenprofilen, und zwar in
Form einerNuttrommel, d.h. für die zu Anfang erläuterte R-Form. Die Nuttrommel besteht aus einem
zylindrischen Trommelkörper 29, auf welchem bei
diesem Ausführungsbeispiel fünf Nutringe 30 angeordnet sind, deren Profilform erfindungsgemäß das
Spannen von U-Nocken und T-Nocken ermöglicht. Die
anhand der Fig. 1 beschriebenen Aussparungen 5,
5 a für eine Schnellbefestigungsvorrichtung fallen
bei diesen Rund-Profilen fort. Das Befestigen der
Nutringe ist auf vielerlei Weise möglich und richtet sich nach den Anbaumöglichkeiten an der betreffenden Maschine. Demgemäß stellt Fig. 8 ein
vorteilhaftes Ausführungsbeispiel dar. Durch Aneinanderreihen von Nutringen 30 können beliebig
viele Nuten hergestellt werden. Bei Verwendung von
fünf Nutringen ergibt sich eine Nuttrommel mit
vier Nuten. Der Trommelkörper 29 ist im Ausführungsbeispiel nach Fig. 8 auf dem Zentrierflansch 31
einer Maschine befestigt. Die Nutringe 30 werden
durch einen Ring 32 gegen einen Bund 33 des Trommelkörpers fest gespannt. In einer der Nuten ist
beispielsweise ein U-Nocken 34 befestigt, welcher
dem Nockenkörper 6 gemäß Fig. 2 entspricht. Die

- 14 -

Nutringe können in mehreren Größen hergestellt
werden, deren Außendurchmesser nach DIN 323 gestuft sind.

Fig. 9 zeigt ein anderes Ausführungsbeispiel, bei
welchem kleinere Nutringe 30 auf einem Wellenzapfen 35 mit einer Ringmutter 36 befestigt sind.
Ein T-Nocken 37, welcher dem T-Nocken 11 gemäß
Fig. 3 entspricht, ist in einer T-Nut mittels
eines Nutensteines 38 an den Schultern 39 des
T-Nutenprofils befestigt.

Um das seitliche Einführen von Nutensteinen für
die T-Nutenbefestigung zu ermöglichen, sind vorteilhafterweise auf dem Umfang jeder T-Nut Einfüllöffnungen für die T-Nocken mit ihren Nutensteinen vorgesehen. Eine andere vorteilhafte Ausgestaltung besteht darin, daß die Nutringe 30 als Segmente ausgebildet sind. Es versteht sich, daß an
der Stelle einer Einfüllöffnung bzw. in den Zwischenräumen zwischen den Segmentenden kein Nocken
gesetzt werden kann.

Wenn das Programm von vornherein feststeht, ist
es aber auch möglich, geschlossene Nutringe zu
verwenden und die T-Nocken gleichzeitig mit den
Nutringen zu montieren, d.h. jeweils vor dem Aufschieben des nächsten Nutringes auf den oben beschriebenen Trommelkörper 29 oder den Wellenzapfen
35 eine entsprechende Anzahl T-Nocken lose einzusetzen und später nach den Festspannen der Nutringe an die richtigen Stellen zu bringen und festzuziehen.

- 15 -

Die Fig. 10 und 11 zeigen Draufsichten auf eine besondere Ausgestaltung eines Nutensteines 38 für die T-Nutenbefestigung in verschiedenen Stellungen. Dieser Nutenstein 38 ist für alle vorgeschriebenen T-Nutenprofile verwendbar. Der Nutenstein 38 ist, wie aus Fig. 10 ersichtlich, geringfügig schmäler als der Abstand zwischen zwei Balken 1 d, 1 e des T-Nutenprofils 1 gewählt, jedoch wesentlich länger ausgebildet. Zwei diagonal gegenüberliegende Ecken weisen Abschrägungen 42 a auf. Der Nutenstein 38 kann an jeder beliebigen Stelle des T-Nutenprofils, gegebenenfalls auch zwischen bereits fest eingesetzten Nocken von außen in eine Nut 40 eingeführt werden. Die Befestigungsschraube 41 ist im Querschnitt und schraffiert dargestellt. Nach den Einführen des Nutensteines 38 in der Stellung nach Fig. 10 wird der Nutenstein durch Drehen der Befestigungsschraube 41 durch Wirkung der Reibung mitgenommen, d.h. im Uhrzeigersinne in die Stellung nach Fig. 11 geschwenkt, so daß sich die punktiert gezeichneten Flächen 42 unter die Schultern des T-Nutenprofiles, z.B. unter die Schultern 2 gemäß Fig. 1 oder die Schultern 39 gemäß Fig. 9 schieben. In dieser Stellung kann der betreffende Nocken dann festgespannt werden.

Fig. 12 zeigt einen Vertikalschnitt und damit das Nockenprofil des erfindungsgemäßen einheitlichen Nockens. Das Nockenprofil besteht aus einem rechteckigen Stab 43 und einer Führungsfeder 44, welche wie beschrieben zu der Nut des T-Nutenprofils bemessen ist. An die Führungsfeder 44 schließt sich einstückig die keilförmige Leiste 8 an, die

- 16 -

das Spannen des Nockens in einer U-Nut ermöglicht, wie zu Fig. 2 erläutert worden ist.

Fig. 13 zeigt eine Seitenansicht zu einem Ausführungsbeispiel eines Schaltnockens 45, welcher aus dem vorerläuterten Profil gemäß Fig. 12 hergestellt ist. Eine schräg angeordnete Bohrung 46 dient zur Aufnahme der Befestigungsschraube, mit welcher sowohl Nutensteine für die U-Nutenbefestigung nach Fig. 2 als auch Nutensteine für die T-Nutenbefestigung nach Fig. 3 angezogen werden können. Die schräge Anordnung der Befestigungsschrauben ist an sich bekannt, z.B. aus den DE-PS 1 231 492 und 2 459 813. Diese schräge Anordnung ermöglicht die Betätigung der Befestigungsschraube durch Steckschlüssel oder Schraubendreher auch dann, wenn der Nocken vor einem Schalter sitzt.

Fig. 14 veranschaulicht in drei Ansichten der Fig. 14 a, 14 b und 14 c ein anderes Ausführungsbeispiel, und zwar ein Nockenendstück 47, welches ebenfalls aus dem Nockenprofil gemäß Fig. 12 gefertigt ist. Dieses Nockenendstück 47 hat die zum Schalten erforderliche Schrägfläche 48 und einen gabelartigen Vorsprung 49, in welchen Gewindebohrungen 50 enthalten sind. Ferner ist am Nockenendstück 47 beidseitig eine aus fünf Strichen bestehende Gravur 51 angebracht, welche dem Einstellen des Nockens auf einem ebenfalls gravierten T-Nutenprofil dient. Diese Gravur erlaubt eine Einstellgenauigkeit von o,5 mm. Sie ist an sich bekannt und zwar aus der DE-PS 1 525 091. Zweckmäßigerweise ist auf dem Nockenendstück 47 beidseitig eine Ziffer angebracht,welche die Nockenhöhe angibt. In Fig. 14 a ist die Höhe

- 17 -

12, 5 mm entsprechend der DIN 69 639 angegeben.
Die Höhenangabe ist wichtig, um Verwechslungen
vorzubeugen, da auch andere Nockenhöhen in großer
Zahl im praktischen Gebrauch sind.

Durch die Gestaltung dieses Nockenendstückes 47
entsteht eine vielseitige Kombinationsfähigkeit
der Nocken, die im folgenden beschrieben ist und
welche durch die erfindungsgemäße Profilform nach
den Fig. 1, 2 und 3 ermöglicht ist.

Fig. 15 zeigt einen Querschnitt durch ein Doppel-
T-Profil 52, dessen oberer Flansch 53 so hoch bemessen ist, daß eine Schaltschräge 58 (Fig. 16)
vorgesehen werden kann. Die Höhe des Steges 54
entspricht der Höhe des gabelförmigen Vorsprunges
49 gemäß Fig. 14. Das Doppel-T-Profil hat ferner
eine Führungsleiste 55, welche in Längsrichtung
der entsprechenden Nute verläuft und besonders
bei sehr langen Nocken das seitliche Ausbiegen
verhindert.

Fig. 16 veranschaulicht in Seitenansicht eine
Kombination aus dem Nockenendstück 47 gemäß Fig.
14 und dem Doppel-T-Profil 52 nach Fig. 15. Das
Nockenendstück 47 ist mit Hilfe des gabelförmigen Vorsprunges 49 in diesem Ausführungsbeispiel
mit einem kurzen Stück 56 des beschriebenen Doppel-T-Profils 52 (Fig. 15) zusammengefügt, d.h.
die gabelartigen Vorsprünge 49 greifen zu beiden
Seiten des Steges 54 des Doppel-T-Profils 52 in
dieses ein. Das Nockenendstück 47 ist mit einer
Klemmschraube 57 am Steg 54 (Fig. 15) festgeklemmt. Das kurze Profilstück 56 hat eine Schalt-

- 18 -

schräge 58 erhalten. Auf diese einfache Weise entsteht ein Kurznocken mit einer gewünschten Länge der Lauffläche 59.

Fig. 17 stellt einen Schnitt gemäß Schnittlinie XVII - XVII in Fig. 16 dar. Das kurze Profilstück 56 hat den gabelförmigen Vorsprung 49 des Nockenendstückes 47 aufgenommen. Dabei ist die beschriebene Gewindebohrung in mindestens einem der gabelartigen Vorsprünge 49 vorgesehen, so daß die Klemmschraube 57 mit dem inneren Ende seitlich an den Steg 54 des Doppel-T-Profils 52 anliegt und die Klemmbefestigung bewirkt.

Fig. 18 zeigt eine Seitenansicht auf eine weitere vorteilhafte Ausgestaltung des erfindungsgemäßen Nockens, und zwar sind hier an beiden Enden eines verhältnismäßig langen Doppel-T-Profils, welches dem Profil 52 nach Fig. 15 entspricht, Nockenendstücke 62 und 63 vorgesehen, die den vorerläuterten Nockenendstücken 47 (Fig. 14 a) entsprechen. Fig. 18 zeigt besonders deutlich die universelle Anwendbarkeit der oben beschriebenen Profile und des daraus hergestellten Nockenendstückes.

Hier drängt sich ein Vergleich mit dem Stand der Technik auf. Nach DIN 69 639 sind Nocken verschiedener Länge vorgesehen, und zwar bis zu einer Höchstlänge von 100 mm. Die vielfach benötigten größeren Längen werden z.Zt. als Sonderausführung hergestellt, wodurch sich der Fertigungsaufwand und damit die Kosten erhöhen.

0126794

- 19 -

Demgegenüber ist nach Fig. 18 das Zwischenstück 60 aus dem Doppel-T-Profil 52 nach Fig. 15 hergestellt. Dieses Profil besteht vorteilhafterweise aus gezogenen oder stranggepreßten Material und kann als Meterware hergestellt und geliefert werden. Ohne Mehraufwand können daher Nocken beliebiger Länge hergestellt werden. Für einen Anwender genügt es, wenn er das Doppel-T-Profil 52 meterweise bezieht und sich nur Nockenendstücke 47 auf Lager legt, um jeden gewünschten Nocken bei Bedarf selbst fertigen zu können. Dabei ist es gleichgültig, ob seine Maschinen mit Nutenprofilen der U-Form oder T-Form ausgerüstet sind.

Fig. 18 zeigt noch strichpunktiert ein erfindungsgemäßes T-Nutenprofil 61 entsprechend dem T-Nutenprofil 1 nach Fig. 1. Dabei ist das eine rechte Nockenendstück 62 mit U-Nutenbefestigung entsprechend Fig. 2 gespannt, während das linke Nockenendstück 63 gemäß Fig. 3 eine T-Nutenbefestigung aufweist.

Durch die wesentlichen Merkmale der Erfindung werden somit diejenigen Bedarfsfälle einheitlich abgedeckt, welche in der DIN 69 638 als Form A und Form B und in DIN 69 639 als Formen UA-UB-TA und TB bezeichnet sind.

Die aus den erfindungsgemäßen Nockenprofilen hergestellten Nocken können sowohl in Metall als auch in Kunststoff ausgeführt werden. Hieraus ergibt sich eine vorteilhafte Möglichkeit, Nocken für die Betätigung berührungsloser Schalter bzw.

- 20 -

Initiatoren herzustellen.

Fig. 19 zeigt einen Nocken, welcher für die Betätigung berührungsloser Schalter bestimmt ist. Der Tastkopf 64 des berührungslosen Schalters wird von dem als Stahlfahne wirkenden Doppel-T-Profilstück 65 in einem Abstand 87, der vorzugsweise etwa 1 mm beträgt unterfahren und bewirkt durch einen mit dem Tastkopf 64 zusammenwirkenden Verstärker 66 ein Schaltsignal. Die Stahlfahne 65 berührt den Tastkopf 64 nicht, sondern tritt lediglich in das Feld des Schwingkreises ein und bewirkt dadurch das Schaltsignal. Es versteht sich, daß je nach den gegebenen Verhältnissen entweder das Nockenendstück 67 mit dem Doppel-T-Profilstück 65 bewegt wird und der Tastkopf 64 feststeht oder umgekehrt.

Der Nocken nach Fig. 19 besteht aus einem Doppel-T-Profilstück 65 entsprechend Fig. 15 mit der Länge 88 und einem Nockenendstück 67 gemäß Fig. 14. Dabei besteht das Nockenendstück 67 vorzugsweise aus Kunststoff, während das Doppel-T-Profilstück 65 aus gezogenem Stahl gebildet ist. Durch diese Werkstoffpaarung beschränkt sich die Einwirkung des Nockens auf den Tastkopf 64 auf die Länge 88. Durch die gleiche Werkstoffpaarung könnte der lange Nocken gemäß Fig. 18 ebenfalls als Initiatornocken verwendet werden.

Fig. 20 veranschaulicht einen Schnitt durch einen Nocken 68, der im wesentlichen mit dem Nocken nach Fig. 12 übereinstimmt und welcher sowohl für die Demgegenüber ist nach Fig. 18 das Zwischenstück 60 aus dem Doppel-T-Profil 52 nach Fig. 15 hergestellt. Dieses Profil besteht vorteilhafterweise aus gezogenen oder stranggepreßten Material und kann als Meterware hergestellt und geliefert werden. Ohne Mehraufwand können daher Nocken beliebiger Länge hergestellt werden. Für einen Anwender genügt es, wenn er das Doppel-T-Profil 52 meterweise bezieht und sich nur Nockenendstücke 47 auf Lager legt, um jeden gewünschten Nocken bei Bedarf selbst fertigen zu können. Dabei ist es gleichgültig, ob seine Maschinen mit Nutenprofilen der U-Form oder T-Form ausgerüstet sind.

Fig. 18 zeigt noch strichpunktiert ein erfindungsgemäßes T-Nutenprofil 61 entsprechend dem T-Nutenprofil 1 nach Fig. 1. Dabei ist das eine rechte Nockenendstück 62 mit U-Nutenbefestigung entsprechend Fig. 2 gespannt, während das linke Nockenendstück 63 gemäß Fig. 3 eine T-Nutenbefestigung aufweist.

Durch die wesentlichen Merkmale der Erfindung werden somit diejenigen Bedarfsfälle einheitlich abgedeckt, welche in der DIN 69 638 als Form A und Form B und in DIN 69 639 als Formen UA-UB-TA und TB bezeichnet sind.

Die aus den erfindungsgemäßen Nockenprofilen hergestellten Nocken können sowohl in Metall als auch in Kunststoff ausgeführt werden. Hieraus ergibt sich eine vorteilhafte Möglichkeit, Nocken für die Betätigung berührungsloser Schalter bzw.

0126794

- 20 -

Initiatoren herzustellen.

Fig. 19 zeigt einen Nocken, welcher für die Betätigung berührungsloser Schalter bestimmt ist. Der Tastkopf 64 des berührungslosen Schalters wird von dem als Stahlfahne wirkenden Doppel-T-Profilstück 65 in einem Abstand 87, der vorzugsweise etwa 1 mm beträgt unterfahren und bewirkt durch einen mit dem Tastkopf 64 zusammenwirkenden Verstärker 66 ein Schaltsignal. Die Stahlfahne 65 berührt den Tastkopf 64 nicht, sondern tritt lediglich in das Feld des Schwingkreises ein und bewirkt dadurch das Schaltsignal. Es versteht sich, daß je nach den gegebenen Verhältnissen entweder das Nockenendstück 67 mit dem Doppel-T-Profilstück 65 bewegt wird und der Tastkopf 64 feststeht oder umgekehrt.

Der Nocken nach Fig. 19 besteht aus einem Doppel-T-Profilstück 65 entsprechend Fig. 15 mit der Länge 88 und einem Nockenendstück 67 gemäß Fig. 14. Dabei besteht das Nockenendstück 67 vorzugsweise aus Kunststoff, während das Doppel-T-Profilstück 65 aus gezogenem Stahl gebildet ist. Durch diese Werkstoffpaarung beschränkt sich die Einwirkung des Nockens auf den Tastkopf 64 auf die Länge 88. Durch die gleiche Werkstoffpaarung könnte der lange Nocken gemäß Fig. 18 ebenfalls als Initiatornocken verwendet werden.

Fig. 20 veranschaulicht einen Schnitt durch einen Nocken 68, der im wesentlichen mit dem Nocken nach Fig. 12 übereinstimmt und welcher sowohl für die U-Nutenbefestigung als auch für die T-Nutenbefestigung geeignet ist. Dieser Nocken 68 besteht jedoch vorzugsweise aus Kunststoff. Etwa in der oberen Hälfte an den beiden Längsseiten sind Rillen 68 a vorgesehen, in welche einwärts abgebogene Kanten 69 a eines dünnwandigen U-förmigen Metallblechprofiles 69 eingreifen. Die Höhe und Breite der von dem Metallblechprofil 69 überdeckten Teile des Nockens 68 sind um die Dicke des Metallblechprofiles 69 verringert. Die Blechstärke beträgt vorteilhafterweise 0,2 mm. Vorteilhafterweise ist das Metallblechprofil 69 federnd ausgebildet und wird von oben auf den Nockenkörper aufgeschoben, bis die beschriebene Einraststellung erreicht ist.

Fig. 21 zeigt eine Stirnansicht auf ein Metallblechprofil entsprechend dem Metallblechprofil 69 nach Fig. 20. In diesem Fall ist aber das mittlere Teil 70 als normales Stahlblech ausgebildet, während die beiden seitlichen Schenkel 70 a als Blattfedern ausgebildet sind, so daß hierdurch das Metallblechprofil am Nockenkörper festgeklemmt wird. Fig. 21 zeigt demgemäß das Metallblechprofil in entspanntem Zustand.

Fig. 22 zeigt eine Seitenansicht eines berührungslos schaltenden Nockens. Der Nockenkörper 71 besteht hierbei aus Kunststoff und übt auf den anhand der Fig. 19 erläuterten Tastkopf 64 keinen Einfluß aus. Die Beeinflussung des Schwingkreises und damit die Schaltung erfolgt nur durch das auf den Nockenkörper aufgezogene Metallblechprofil 70 (Fig. 21), welches bei diesem Ausführungsbeispiel durch die Seitenteile in Form von vier paarweise angeordneten Blattfedern 70 a befestigt ist.

Fig. 23 zeigt die Abwicklung des Metallblechprofiles nach Fig. 22, wobei zu beiden Seiten des mittleren Teiles 70 rechteckige Schenkel 70 a mit dazwischen liegenden Ausschnitten 70 b vorhanden sind. Dieser in beliebiger Länge hergestellte Blechstreifen kann für die jeweilige Nockenlänge bzw. die Länge des Doppel-T-Profiles zugeschnitten und dann durch Umbiegen der Schenkel 70 a zur Anwendung gebracht werden.

Fig. 24 zeigt in Draufsicht ein an sich aus der DE-PS 27 18 150 bekanntes Gitter-Nutenfeld. Dieses Gitter-Nutenfeld stellt eine Ausführung des Nutenprofils nach DIN 69 638 Form C für Nocken der Form G dar. Das Gitter-Nutenfeld besteht aus gezogenen Flachstäben 72 nach DIN 174 und aus zwei Endstücken 73. Die Endstücke weisen eine Zahl der Gitterstäbe 72 entsprechende Anzahl von Durchbrechungen 74 auf, welche die Gitterstabenden 75 auf ihrem gesamten Umfang umgeben und in welchem die Gitterstabenden durch Zwei-Komponenten-Metallkleber befestigt werden.

Fig. 25 zeigt einen Teilquerschnitt zu Fig. 24 entsprechend der Schnittlinie XXV - XXV, und zwar mit einem in der Nut befestigten G-Nocken 76. Wie Fig. 25 deutlich erkennen läßt, entspricht dieser G-Nocken 76 wieder dem in dem vorhergehenden Ausführungsbeispiel erläuterten einheitlichen Nocken

mit dem Nockenprofil nach Fig. 12. Der G-Nocken 76 kann wahlweise sowohl aus Stahl als auch aus Kunststoff hergestellt sein. Hieraus ergeben sich für die Gitternocken die gleichen Variationsmöglichkeiten, wie sie bereits anhand der Fig. 13 bis 23 beschrieben worden sind.

Die Befestigung des G-Nockens 76 erfolgt von der dem Schaltvorgang abgewandten Seite des Nutenfeldes aus durch Befestigungsschrauben 77 und Nutensteine 78. Die Befestigungsschrauben sind bei diesem Ausführungsbeispiel von unten von der Bedienungsperson frei zugänglich und können somit unbehelligt von Schaltern und Stößeln und dergleichen angezogen werden.

Anhand der Fig. 26 wird ebenfalls der besondere Vorteil des erfindungsgemäßen einheitlichen Nockens deutlich, und zwar bei diesem Ausführungsbeispiel in der Verwendung als G-Nocken. Die Verwendung eines Nockens mit dem Nockenprofil nach Fig. 12 bei Gitternutenfeldern stellt also eine weitere mögliche vorteilhafte Variante dar, wobei die an sich bekannten Vorteile der Gitternutenfelder beibehalten werden können.

Der Schalter 79 mit dem Schaltstößel 80 ist bei dem Ausführungsbeispiel nach Fig. 26 in einer Nische des feststehenden Maschinenbetts 81 angeordnet. Das Gitternutenfeld 82 ist mit Schrauben 83 auf bearbeiteten Flächen 84 des Maschinenteils befestigt, welches gegenüber dem Maschinenbett beweglich ist, z.B. auf dem Maschinenschlitten.

- 24 -

Hierdurch wird der Schalter 79 durch das Gitter-
nutenfeld 82 gegenüber der Bedienungsperson verdeckt. Diese Anordnung schützt den Schalter gegen
Beschädigung von außen und trägt zur Sicherung
gegen Unfälle bei, da ein Hineingreifen der Bedienungsperson zwischen Schalterstößel und Nocken
nicht möglich ist.

Der Gitter-Nocken 85 bzw. G-Nocken besteht hier
aus zwei Nockenendstücken entsprechend Fig. 14
und einem Zwischenstück in Form eines Doppel-T-Profiles nach Fig. 15. Die Befestigung wird entsprechend Fig. 25 durch Befestigungsschrauben 77 und
Nutensteine 78 vorgenommen. Der eingezeichnete
Innensechskantschlüssel 86 zeigt, daß das Einstellen und Verschieben der Nocken von außen, in diesem Falle also von der freizugänglichen Unterseite aus erfolgen kann.

Nach Beschreibung der Zeichnungen sei nachfolgend
noch folgendes zusammenfassend erläutert. Die Fig.
1 bis 26 veranschaulichen insgesamt ein Baukasten-
system, welches mit wenigen Grundelementen alle
Aufgaben erfüllt, welche an eine Nockensteuerung
in der Praxis gestellt werden. Im Vergleich zu
DIN 69 638 ist nur eine Profilform erforderlich.
Das erfindungsgemäße T-Nutenprofil ersetzt die beiden Formen A und B der DIN 69 638. Die Profilform
des erfindungsgemäßen einheitlichen Nockens nach
Fig. 12 ist für alle Verwendungsarten entsprechend
den Nocken UA, UB, TA, TB und G nach DIN 69 639
geeignet.

Die wesentliche Vereinfachung hinsichtlich der Nutenprofile wurde erfindungsgemäß dadurch erreicht, daß bei dem T-Nutenprofil nach Fig. 1 die T-Balken wie beschrieben die Höhe erhalten, welche der Tiefe einer U-Nut nach Form A der DIN 69 638 entspricht. Hierdurch können nicht nur die Nocken mit dem Profil nach Fig. 12, sondern auch alle bekannten U-Nocken nach DIN 69 639 in dem T-Nutenprofil nach Fig. 1 befestigt werden.

Auch die weiteren Ausgestaltungen der Erfindung bringen unter dem Gesichtswinkel des Baukastensystems erhebliche Vorteile mit sich. Durch das aus dem Nockenprofil gefertigte Nockenendstück nach Fig. 14 können in Verbindung mit dem Doppel-T-Profil nach Fig. 15 Nocken beliebiger Länge zusammengestellt werden. Der Verbraucher ist hierdurch nicht an die Längen der DIN 69 639 gebunden, sondern kann sogar selbst Nocken seines Bedarfs aus Nockenendstücken und dem als Meterware beziehbaren Doppel-T-Profil (Fig. 15) zusammenstellen. Das für alle Nocken geeignete Nockenendstück kann in großen Stückzahlen und daher wirtschaftlich gefertigt werden.

Für die Nockenbefestigung in der T-Nut des T-Nutenprofils nach Fig. 1 wurde der Nutenstein 12 gemäß den Fig. 3 und 4 gestaltet. Seine besondere Form, vor allem die rillenförmige Aussparung 13 erlaubt es, Nocken sowohl in dem erfindungsgemäßen T-Nutenprofil als auch in einem T-Profil nach DIN 69 638 zu befestigen.

- 26 -

Die Form des erfindungsgemäßen T-Nutenprofils läßt
sich auf das Rundnuten-Programm wie oben dargelegt übertragen. Auch die Nutringe 30 nach Fig.8
und 9 können in größerer Stückzahl wirtschaftlicher hergestellt werden als einzelne Mehrfach-
Nutentrommeln.

Die erfindungsgemäße T-Nutenprofile sind im übrigen so vielseitig verwendbar, daß auch die wirtschaftliche Herstellung folgender bisher in der
Praxis als Sonderausführung bekannter Ergänzungen
des Nocken- und Nutenprogramms durchführbar wird:
  a) Die Schnellbefestigungsvorrichtung nach den
     Fig. 5 und 6,
  b) die Verbindung von T-Nutenprofilen nach Fig. 7,
  c) die einfache Umwandlung von Kunststoffnocken
     in berührungslos schaltende Nocken durch Verwendung von Metallblechprofilen entsprechend
     den Fig. 20, 22 und 23.

Das an sich bekannte System der Gitter-Nutenfelder nach DE-PS 27 18 150 paßt zu dem oben erläuterten Baukasten-System nach der Erfindung, da
es aus zwei einfachen Bauelementen besteht, welche den Selbstbau von Nutenfeldern durch den Verbraucher zulassen, der lediglich die Endstücke
73 nach Fig. 24 zu beziehen braucht. Flachmaterial
nach DIN 174 ist bei Bedarf aus dem Eisenhandel
erhältlich.

Ein wesentlicher Vorteil ergibt sich aus der Erfindung ferner dadurch, daß sowohl das Nockenprofil gemäß Fig. 12 als auch das Nockenendstück nach Fig. 14 und das Doppel-T-Profil nach Fig. 15 ebenfalls für alle vorkommenden Gitternocken geeignet sind.

Ausgehend von dem T-Nutenprofil nach Fig. 1 wurde durch Gestaltung eines einheitlichen Nockenprofils nach Fig. 12 erfindungsgemäß die Grundlage für ein Baukasten-System geschaffen, welches alle Bedarfsfälle für die elektromechanische Steuerung von Maschinen durch Nocken und Nutenfelder erfaßt und deckt.

0126794

- 1 -

<u>Patentansprüche:</u>

1. Vorrichtung zur elektromechanischen Steuerung und/oder Sicherung von Maschinenbewegungen mit einem oder mehreren T-Nutenprofilen sowie einem oder mehreren Nocken zur Betätigung von Grenztastern, wobei jeder Nocken mittels mindestens einer Schraube und eines Nutensteines an dem T-Nutenprofil befestigbar ist, dadurch gekennzeichnet, daß die Höhe (1 c) der beiden sich bei jeder T-Nut (1 a) gegenüberliegenden Balken (1 d, 1e) so gewählt ist, daß sie im wesentlichen der Tiefe einer üblichen U-Nut entspricht, daß jeder Nocken (6, 11, 34, 37, 43, 45, 68, 76) aus einem im Querschnitt im wesentlichen rechteckigen Stab gebildet ist, welcher eine Führungsfeder (44), die entsprechend dem Abstand zwischen den beiden Balken (1 d, 1 e) bemessen ist und eine keilförmige Leiste (8) aufweist, und daß der Nocken wahlweise mit einem Nutenstein zur T-Nuten- oder U-Nutenbefestigung versehen ist.

2. Vorrichtung nach Anspruch 1, dadurch gekennzeichnet,

- 2 -

daß zwischen der Bodenfläche und den längsverlaufenden Seitenwänden des erweiterten Teiles
der T-Nut (1 a) Schrägflächen (3) vorgesehen
sind.

3. Vorrichtung nach Anspruch 1 oder 2,
   dadurch gekennzeichnet,
   daß auf der Unterseite des T-Nutenprofiles mit
   Abstand von den äußeren Längsseiten rillenförmige und bis zu den Längsseiten führende abgeflachte Aussparungen (5, 5 a) für eine Schnellbefestigungsvorrichtung vorgesehen sind.

4. Vorrichtung nach einem der vorhergehenden Ansprüche,
   dadurch gekennzeichnet,
   daß der Nutenstein (10) für die U-Nutenbefestigung eine der keilförmigen Leiste (8) des
   Nockens (6) angepaßte Schräg- bzw. Keilfläche
   (10 a) aufweist.

5. Vorrichtung nach einem der Ansprüche 1 bis 3,
   dadurch gekennzeichnet,
   daß der Nutenstein (12) für die T-Nutenbefestigung auf der nach dem Nocken (11) zu liegenden
   Seite eine längsverlaufende rillenförmige Aussparung (13) mit einer Schräg- bzw. Keilfläche
   aufweist, in welche  mindestens ein Teil der
   keilförmigen Leiste (8) des Nockens eingreifen
   kann.

6. Vorrichtung nach einem der Ansprüche 3 bis 5,
   dadurch gekennzeichnet,
   daß die Schnellbefestigungsvorrichtung mindestens zwei spiegelbildlich einander und quer zur Längsrichtung des Nutenprofiles (1) gegenüberliegende U-förmige nach oben öffnende Spannelemente (16) aufweist, daß je ein Schenkel (20) des Spannelementes mit Spiel in die betreffende rillenförmige Ausparung (5) eingreift, daß der andere, längere Schenkel (16 a) auf der Innenfläche (16 b) schräg bzw. keilförmig ausgebildet ist, daß zwischen dieser keilförmigen Innenfläche (16 b) und der äußeren Längsseite (19) des T-Nutenprofils (1) ein Klemmstück (17) eingesetzt ist, welches mit einer Längsfläche an der Längsseite (19) und mit einer gegenüber befindlichen Keilfläche (17 a) an der keilförmigen Innenfläche (16 b) anliegt, und daß eine Schraube (18) durch eine Bohrung (17 b) des Klemmstückes (17) sowie eine Bohrung des Spannelementes (16) bis in eine Gewindebohrung (15 a) eines Maschinenbettes (15) oder Maschinenschlittens, auf welchem das T-Nutenprofil (1) und die Spannelemente (16) ebenflächig aufliegen, geführt und einschraubbar ist.

7. Vorrichtung nach Anspruch 6,
dadurch gekennzeichnet,
daß die Bohrung (17 b) des Klemmstückes (17) im unteren Teil erweitert ist, und daß in diesem erweiterten Teil eine die Schraube (18) teilweise umgebende Druckfeder (21) eingesetzt ist.

8. Vorrichtung nach Anspruch 6 oder 7,
dadurch gekennzeichnet,

- 4 -

daß zwischen Spannelement (16) und Maschinenbett (15) oder Maschinenschlitten eine weitere
Schraube (22) sowie zwei Paßstifte (23) vorgesehen sind.

9. Vorrichtung nach Anspruch 1 und 3,
dadurch gekennzeichnet,
daß zwecks Verbindung von zwei einzelnen oder
mehrfachen T-Nutenprofilen (24, 25) eine Profilleiste (26) vorgesehen ist, welche in die
Aussparungen (5, 5a) der benachbarten T-Nutenprofile eingreifend ausgebildet ist und deren
Breite so gewählt ist, daß die durch die Profilleiste und die benachbarten T-Nutenprofile
gebildete T-Nut den übrigen T-Nuten entspricht.

10. Vorrichtung nach Anspruch 9,
dadurch gekennzeichnet,
daß die Profilleiste (26)mittels Paßstiften
(27) ausrichtbar ist.

11. Vorrichtung nach Anspruch 9,
dadurch gekennzeichnet,
daß die Profilleiste (26) mit den benachbarten
T-Nutenprofilen (24, 25) durch einen Metallkleber verbunden ist.

12. Vorrichtung nach einem der Ansprüche 9 bis 11,
dadurch gekennzeichnet,
daß die T-Nutenprofile (24, 25) mittels stellenweiser Zylinderkopfschrauben (28) auf dem
Maschinenbett (15) oder Maschinenschlitten befestigt sind.

13. Vorrichtung nach Anspruch 1,

dadurch gekennzeichnet,

daß die T-Nuten von je zwei benachbarten Nutringen (30) gebildet sind, welche dicht nebeneinander auf einen zylindrischen Körper, insbesondere einem Trommelkörper (29) oder einem Wellenzapfen (35) aufgezogen und zwischen einem Bund (33) einerseits und einem anschraubbaren Ring (32) oder einer Ringmutter (36) andererseits festgespannt sind.

14. Vorrichtung nach Anspruch 13,

dadurch gekennzeichnet,

daß auf dem Umfang jeder T-Nut eine Einfüllöffnung für T-Nocken mit ihren Nutensteinen vorgesehen ist.

15. Vorrichtung nach Anspruch 13,

dadurch gekennzeichnet,

daß die Nutringe (30) als Segmente ausgebildet sind.

16. Vorrichtung nach einem der vorhergehenden Ansprüche,

dadurch gekennzeichnet,

daß der Nutenstein (38) für die T-Nutenbefestigung geringfügig schmäler als der Abstand zwischen zwei Balken (1 d, 1 e) der T-Nutenprofile (1) gewählt jedoch wesentlich länger ausgebildet ist, und daß zwei diagonal gegenüberliegende Ecken abgeschrägt (42 a) sind.

17. Vorrichtung nach einem der Ansprüche 1 bis 12

- 6 -

und 16,

dadurch gekennzeichnet,

daß der Nocken aus einem Nockenendstück (47)
und einem beliebig lang gewählten Doppel-T-Profil (52) besteht, daß das Nockenendstück (47)
zwei gabelartige Vorsprünge (49) aufweist,
welche zu beiden Seiten des Steges (54) des
Doppel-T-Profils (52) in dieses eingreifen,
und daß quer verlaufende Bohrungen (50) bzw.
Gewindebohrungen für eine Klemmschraube (57)
vorgesehen sind.

18. Vorrichtung nach Anspruch 17,
dadurch gekennzeichnet,
daß der obere Flansch (53) des Doppel-T-Profiles (52) so gewählt ist, daß eine Schaltschräge (58) vorgesehen werden kann, und daß
die Höhe des Steges (54) des Doppel-T-Profils
(52) der Höhe der gabelartigen Vorsprünge (49)
entspricht.

19. Vorrichtung nach Anspruch 1 und den Ansprüchen,
17 oder 18,
dadurch gekennzeichnet,
daß an dem Nockenendstück (47) die Führungsfeder (44) mit der keilförmigen Leiste (8) und
an dem Doppel-T-Profil (52) eine längsverlaufende Führungsleiste (55) vorgesehen sind.

20. Vorrichtung nach einem der Ansprüche 17 bis 19,
dadurch gekennzeichnet,
daß die Gewindebohrung in mindestens einem der
gabelartigen Vorsprünge (49) vorgesehen ist, und daß die Klemmschraube (57) mit dem inneren Ende seitlich an dem Steg (54) des Doppel-T-Profils (52) anliegt.

21. Vorrichtung nach einem der Ansprüche 17 bis 20, dadurch gekennzeichnet, daß an beiden Enden des Doppel-T-Profils (52) Nockenendstücke (62, 63) angebracht sind.

22. Vorrichtung nach einem der Ansprüche 17 bis 21, dadurch gekennzeichnet, daß das Doppel-T-Profil (52)aus gezogenem oder stranggepreßtem Material besteht.

23. Vorrichtung nach einem der Ansprüche 17 bis 22, dadurch gekennzeichnet, daß das Doppel-T-Profil (52) aus Metall, vorzugsweise aus gezogenem Stahl und jedes Nockenendstück (62, 63) aus Kunststoff bestehen.

24. Vorrichtung nach Anspruch 23, dadurch gekennzeichnet, daß der Nocken (65, 67) mit einem berührungslosen Schalter zusammenwirkt, welcher einen Tastkopf (64) mit Verstärker (66) aufweist, wobei der Tastkopf (64) mit Abstand von dem Nocken (65, 57) angeordnet und Nocken und Tastkopf relativ zueinander bewegbar sind.

25. Vorrichtung nach Anspruch oder einem der Ansprüche 17 bis 24, dadurch gekennzeichnet, daß der Nocken (68) und/oder das Doppel-T-Profil aus Kunststoff besteht, daß etwa in der und 16,

dadurch gekennzeichnet,

daß der Nocken aus einem Nockenendstück (47)
und einem beliebig lang gewählten Doppel-T-Profil (52) besteht, daß das Nockenendstück (47)
zwei gabelartige Vorsprünge (49) aufweist,
welche zu beiden Seiten des Steges (54) des
Doppel-T-Profils (52) in dieses eingreifen,
und daß quer verlaufende Bohrungen (50) bzw.
Gewindebohrungen für eine Klemmschraube (57)
vorgesehen sind.

18. Vorrichtung nach Anspruch 17,

dadurch gekennzeichnet,

daß der obere Flansch (53) des Doppel-T-Profiles (52) so gewählt ist, daß eine Schaltschräge (58) vorgesehen werden kann, und daß
die Höhe des Steges (54) des Doppel-T-Profils
(52) der Höhe der gabelartigen Vorsprünge (49)
entspricht.

19. Vorrichtung nach Anspruch 1 und den Ansprüchen,
17 oder 18,

dadurch gekennzeichnet,

daß an dem Nockenendstück (47) die Führungsfeder (44) mit der keilförmigen Leiste (8) und
an dem Doppel-T-Profil (52) eine längsverlaufende Führungsleiste (55) vorgesehen sind.

20. Vorrichtung nach einem der Ansprüche 17 bis 19,

dadurch gekennzeichnet,

daß die Gewindebohrung in mindestens einem der
gabelartigen Vorsprünge (49) vorgesehen ist, und daß die Klemmschraube (57) mit dem inneren Ende seitlich an dem Steg (54) des Doppel-T-Profils (52) anliegt.

21. Vorrichtung nach einem der Ansprüche 17 bis 20, dadurch gekennzeichnet, daß an beiden Enden des Doppel-T-Profils (52) Nockenendstücke (62, 63) angebracht sind.

22. Vorrichtung nach einem der Ansprüche 17 bis 21, dadurch gekennzeichnet, daß das Doppel-T-Profil (52) aus gezogenem oder stranggepreßtem Material besteht.

23. Vorrichtung nach einem der Ansprüche 17 bis 22, dadurch gekennzeichnet, daß das Doppel-T-Profil (52) aus Metall, vorzugsweise aus gezogenem Stahl und jedes Nockenendstück (62, 63) aus Kunststoff bestehen.

24. Vorrichtung nach Anspruch 23, dadurch gekennzeichnet, daß der Nocken (65, 67) mit einem berührungslosen Schalter zusammenwirkt, welcher einen Tastkopf (64) mit Verstärker (66) aufweist, wobei der Tastkopf (64) mit Abstand von dem Nocken (65, 57) angeordnet und Nocken und Tastkopf relativ zueinander bewegbar sind.

25. Vorrichtung nach Anspruch oder einem der Ansprüche 17 bis 24, dadurch gekennzeichnet, daß der Nocken (68) und/oder das Doppel-T-Profil aus Kunststoff besteht, daß etwa in der

- 8 -

oberen Hälfte an den beiden Längsseiten Rillen (68 a) vorgesehen sind, in welche einwärts abgebogene Kanten (69 a) eines dünnwandigen U-förmigen Metallblechprofiles (69) eingreifen.

26. Vorrichtung nach Anspruch 25, dadurch gekennzeichnet, daß die beiden Schenkel (70 a) des Metallblechprofiles (70) als Blattfedern ausgebildet sind.

27. Vorrichtung nach Anspruch 25 oder 26, dadurch gekennzeichnet, daß die Höhe und Breite der von dem Metallblechprofil (69) überdeckten Teile des Nockens (68) und/oder des Doppel-T-Profiles um die Dicke des Metallblechprofiles (69) verringert sind.

28. Vorrichtung nach einem der Ansprüche 25 bis 27, dadurch gekennzeichnet, daß das Metallblechprofil (70) aus einem rechteckigen, in beliebiger dem Nocken entsprechender Länge abschneidbarem Federblech gebildet ist, dessen Seitenteile rechteckige Ausschnitte (70 b) aufweisen.

0126794

FIG. 1

FIG. 2

FIG. 3

FIG. 4

lt 383

FIG. 5

FIG. 6

FIG. 7

FIG. 8

FIG. 9

FIG. 10

FIG. 11

lt 383

**FIG. 12**

**FIG. 13**

**FIG. 14a**

**FIG. 14b**

**FIG. 14c**

**FIG. 15**

58  56  59  XVII  49  47

57  12,5

XVII

**FIG. 16**

52  56

49  49

57  54

**FIG.17**

47

63  60  62

12,5  12,5  61

**FIG.18**

66

64

87

65  12,5  67

88  **FIG. 19**

FIG. 20

FIG. 21

FIG. 22

FIG. 23

lt 383

FIG. 24

FIG. 25

FIG. 26

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | FR-A-2 013 402 (TRAUB VERTRIEBSGESELLSCHAFT) * Seite 2, Zeile 31 - Seite 3, Zeile 40; Seite 4, Zeilen 22-26 * | 1,2,4, 5,13 | H 01 H 15/10 B 23 Q 3/10 |
| Y | US-A-4 186 916 (SALISBURY SPECIAL TOOL) * Spalte 2, Zeile 47 - Spalte 3, Zeile 11 * | 1 | |
| Y | DE-A-1 937 302 (K. MAECKER) * Seite 5, Absatz 1 * | 2 | |
| A | DE-B-1 425 979 (K. MAECKER) * Spalte 2, Zeilen 22-40 * | 12 | |
| A | DE-A-3 140 459 (PEPPERL & FUCHS) * Seite 12, Absatz 4 * | 16 | RECHERCHIERTE SACHGEBIETE (Int. Cl. ³) |
| A | CH-A- 438 455 (LICENTIA) * Spalte 4, Zeilen 11-41 * | 17,18 | H 01 H 15/00 B 23 Q 21/00 B 23 Q 3/10 H 01 H 19/00 H 01 H 3/00 |
| A | DE-A-2 618 018 (UNIDOR) * Seite 5, Absatz 3; Seite 7, Absatz 3 * | 24,25 | H 01 H 43/00 F 16 B G 05 B 19/00 |

Der vorliegende Recherchenbericht wurde für alle Patentansprüche erstellt.

| Recherchenort DEN HAAG | Abschlußdatum der Recherche 07-02-1984 | Prüfer LIBBERECHT L.A. |
|---|---|---|